# EUROPÄISCHE PATENTSCHRIFT

(11) **EP 2 800 673 B1**
(45) Veröffentlichungstag und Bekanntmachung des Hinweises auf die Patenterteilung: **13.06.2018**
(21) Anmeldenummer: 12818887.7
(22) Anmeldetag: 17.12.2012
(51) Int. Cl.: B60N 2/22, B60N 2/68, B60R 22/26, B60R 22/18

(54) **VORRICHTUNG ZUR GURTFÜHRUNG AN EINEM GURTINTEGRALSITZ**
DEVICE FOR GUIDING A SEAT BELT ON A SEAT HAVING AN INTEGRATED SEAT BELT
DISPOSITIF DE GUIDAGE D'UNE CEINTURE POUR SIÈGE AVEC CEINTURE DE SÉCURITÉ INTÉGRÉE

(30) Priorität: 04.01.2012 DE 102012100060; 10.04.2012 DE 102012103038
(43) Veröffentlichungstag der Anmeldung: 12.11.2014
(73) Patentinhaber: Adient Luxembourg Holding S.à r.l., 1855 Luxembourg (LU)
(72) Erfinder: BASTERS, Udo, 67808 Stahlberg (DE); PAULUS, Peter, 67827 Becherbach (DE); ZUMBACH, Harald, 67677 Enkenbach-Alsenborn (DE)
(74) Vertreter: Loock, Jan Pieter
(86) Internationale Anmeldenummer: PCT/EP2012/075787
(87) Internationale Veröffentlichungsnummer: WO 2013/102552

(56) Entgegenhaltungen:
- EP-A2- 2 003 014

## Beschreibung

Die Erfindung betrifft eine Vorrichtung zur Gurtführung an einem Gurtintegralsitz, mit mindestens einem oberen Gurtführungselement oberhalb einer Schwenkachse einer mehrteiligen Rückenlehne des Gurtintegralsitzes und mindestens einem unteren Gurtführungselement unterhalb der Schwenkachse der mehrteiligen Rückenlehne des Gurtintegralsitzes sowie einen Gurtintegralsitz für ein Kraftfahrzeug. Eine Vorrichtung zur Gurtführung entsprechend dem Oberbegiff des Anspruchs 1 sowie ein Gurtintegralsitz für ein Kraftfahrzeug gemäss dem Oberbegriff des Anspruchs 8 ist aus der EP 2,003,014 bekannt. Gurtintegralsitze, welche insbesondere bei Cabriolets oder Nutzfahrzeugen eingesetzt werden, sind in vielfältiger Ausgestaltung aus dem Stand der Technik bekannt. Bei ihnen verläuft der Gurt partiell im Inneren des Sitzes, wobei ein Aufrollautomat des Gurtes in der Regel am unteren Teil eines Sitzrahmens befestigt ist. Der Gurt verläuft dann innerhalb einer Rückenlehne aufwärts und tritt im oberen Teil der Rückenlehne nach Vorne aus dieser heraus.

Zur Komfortsteigerung weisen einige bekannte Gurtintegralsitze Vorrichtungen zur Veränderung der Krümmung der Lehnenfläche auf, wobei hierzu die Rückenlehnen mehrteilig ausgebildet sein können, was eine Verstellung des Winkels der verschiedenen Lehnenabschnitte relativ zueinander ermöglicht.

Um eine freie Beweglichkeit des Gurtes in allen möglichen Ausrichtungen der Rückenlehne zu gewährleisten, wird eine Vorrichtung zur Führung des Gurtes im Inneren der verstellbaren Rückenlehne benötigt. Andernfalls besteht die Gefahr, dass der Gurt im Lehneninneren zwischen einer sitzinternen Stützstruktur der Rückenlehne und einer äußeren Bepolsterung der Lehnenvorderseite oder einer äußeren Abdeckung der Lehnenrückseite eingeklemmt wird. Zur Sicherung der Funktion ist es bereits bekannt einen formstabilen, flexiblen Kunststoffkanal zur Führung des Gurtes im Inneren der Rückenlehne zu verbauen. Dies ist jedoch sehr kostenintensiv und aufwändig in der Montage.

Der Erfindung liegt die Aufgabe zugrunde, eine kostengünstige und leicht zu montierende Vorrichtung bereitzustellen, die in einfacher Weise eine sichere Gurtführung im Inneren der Rückenlehne eines Gurtintegralsitzes gewährleistet und ein Einklemmen des Gurtes bei einer Verstellung innerhalb der Rückenlehne verhindert.

Die Aufgabe wird erfindungsgemäß durch eine Gurtführung nach Anspruch 1 sowie einen Gurtintegralsitz nach Anspruch 10 gelöst. Vorteilhafte Weiterbildungen der Erfindung sind in den abhängigen Ansprüchen angegeben.

Die erfindungsgemäße Vorrichtung zur Gurtführung an einem Gurtintegralsitz umfasst mindestens zwei Gurtführungselemente, wobei sich mindestens eines der Gurtführungselemente oberhalb einer Schwenkachse einer mehrteiligen Rückenlehne befindet und mindestens ein weiteres Gurtführungselement unterhalb der Schwenkachse der genannten, mehrteiligen Rückenlehne angeordnet ist. Angaben wie "oberhalb" und "unterhalb" beziehen sich dabei an dieser Stelle sowie nachfolgend auf die Einbaulage des Gurtintegralsitzes im Fahrzeug. Die Anordnung der Gurtführungselemente am Gurtintegralsitz ist derart gewählt, dass ein Einklemmen des Gurtes bei einem Verstellen der Rückenlehne im Bereich der Schwenkachse, insbesondere mit einer vorderseitigen Polsterfläche der Rückenlehne, einer Abdeckung auf der Rückseite der Rückenlehne, die aus einem formstabilen, flexiblen Material wie Sperrholzplatte, Pappe oder einer Kunststoffplatte ausgebildet sein kann, oder einem internen Bauelement der Rückenlehne, etwa einem Teil der Rahmenstruktur, einer Sitzverstrebung oder einer Lordosenstützen, verhindert und eine sichere Gurtführung in einer beliebigen Anordnung des oberen und des unteren Rückenlehnenteils relativ zueinander ermöglicht wird.

Grundsätzlich kann zur Herstellung der Gurtführungselemente jedes beliebige Material verwendet werden. So ist es beispielsweise möglich, das Gurtführungselement aus einem Kunststoff oder einem Verbundmaterial herzustellen. Nach einer vorteilhaften Ausgestaltung der erfindungsgemäßen Gurtführung ist jedoch mindestens ein Gurtführungselement aus Metall, bevorzugt aus Metalldraht gebildet, wodurch eine kostengünstige Produktion und einfache Montage möglich ist. Die Verwendung eines Metalldrahts erlaubt überdies eine einfache Formgebung, sodass sich das Gurtführungselement besonders kostengünstig in der vorgesehenen Form herstellen lässt.

In einer besonders vorteilhaften Ausgestaltung der Erfindung ist mindestens ein Gurtführungselement durch Verformen eines Bauteils einer sitzinternen Stützstruktur des Gurtintegralsitzes gebildet. Bevorzugt ist dabei das Gurtführungselement durch Biegen einer Verlängerung einer sitzinternen Lordosenstütze aus Metalldraht geformt. Auf diese Weise wird vorteilhaft eine kostengünstige Gurtführung erhalten, bei der keine Montage eines separaten Bauteiles notwendig ist, da diese nur durch Biegen von vorhandenen Bauteilen, beziehungsweise Verlängerungen dieser Bauteile, einfach gebildet wird.

Darüber hinaus kann ein Gurtführungselement auch als Teil einer Sitzverstrebung, einer Sitzfederung oder eines beliebigen anderen Bauteils der Rückenlehne durch Biegen, Verformen, Verlängern, Ausweiten oder Formen von Hohlräumen ausgebildet sein. Dabei kann das Gurtführungselement aus einem einzelnen Bauteil der sitzinternen Stützstruktur geformt oder aus mehreren verschiedenen solcher Bauteile gebildet sein.

In einer vorteilhaften Weiterbildung der Erfindung weist zumindest ein Gurtführungselement mindestens zwei gurtführende Abschnitte zur beidseitigen Führung des Gurtes auf, wodurch ein Einklemmen des Gurtes im Gurtintegralsitzinneren in allen möglichen Ausrichtungen der mehrteiligen, eine Schwenkachse aufweisenden Rückenlehne in einfacher Weise verhindert wird.

Bevorzugt verlaufen dabei die gurtführenden Abschnitte eines Gurtführungselementes gegenüber der Gurtverlaufsrichtung gewinkelt, besonders bevorzugt rechtwinklig, wodurch eine Gefahr eines seitlichen Abgleitens des Gurtes von dem Gurtführungselement besonders zuverlässig verringert wird.

In einer besonders bevorzugten Ausführungsform der Erfindung sind mehrere gurtführende Abschnitte eines Gurtführungselementes in Gurtverlaufsrichtung in Abstand voneinander angeordnet. Auch eine Ausführungsform mit zwei sich gegenüber liegenden, gurtführenden Abschnitten eines Gurtführungselementes auf beiden Seiten des Gurtes ist möglich.

Nach einer vorteilhaften Ausgestaltung der Erfindung ist ferner vorgesehen, dass mindestens ein Gurtführungselement mit beidseitig des Gurtes anordbaren, gurtführenden Abschnitten eine die Abschnitte verbindende, den Gurt gegen seitliches Verrutschen sichernde Seitenkante aufweist, wodurch eine besonders präzise Gurtführung erreicht wird und in einfacher Weise ein Hinausrutschen des Gurtes aus dem Gurtführungselement bei seiner Nutzung verhindert wird.

Ganz besonders bevorzugt weist mindestens ein Gurtführungselement drei entlang der Gurtverlaufrichtung im Abstand voneinander versetzt angeordnete gurtführende Abschnitte auf, wobei die äußeren Abschnitte einerseits des Gurtes anordbar und der zwischen den äußeren Abschnitten liegende Abschnitt andererseits des Gurtes anordbar ist. Unter den äußeren Abschnitten sind diejenigen zwei Abschnitte eines Gurtführungselementes zu verstehen, die in der entlang der Gurtverlaufrichtung im Abstand voneinander versetzten Anordnung der gurtführenden Abschnitte den größten Abstand voneinander haben. In einer besonders vorteilhaften Weiterbildung dieser Ausführungsform ist das Gurtführungselement aus einem einzelnen Bauteil des Gurtintegralsitzes geformt und derart durch Umformen hergestellt, dass es den Gurt zusätzlich an beiden seitlichen Kanten umgibt, wodurch ein Hinausrutschen des Gurtes aus der Vorrichtung zur Gurtführung besonders vorteilhafterweise ausgeschlossen ist.

In einer vorteilhaften Ausgestaltung des erfindungsgemäßen Gurtintegralsitzes sind die Gurtführungselemente direkt mit einem Rahmenelement der Rückenlehne verbunden. Weiterhin sind auch Ausgestaltungen des Gurtintegralsitzes möglich, bei denen ein Gurtführungselement zunächst mit einem anderen Teil der Sitzstruktur oder ausschließlich mit einem Polster- und Abdeckungsmaterial der Rückenlehne verbunden ist.

Weiterhin betrifft die Erfindung einen Gurtintegralsitz für ein Kraftfahrzeug, mit einer mehrteiligen, um eine Schwenkachse verschwenkbaren Rückenlehne, einem zumindest teilweise innerhalb der Rückenlehne des Gurtintegralsitzes verlaufenden Gurt und der vorstehend beschriebenen erfindungsgemäßen Vorrichtung zur Gurtführung.

Vorteilhaft gegenüber den Vorrichtungen des Standes der Technik ist, dass der Montageaufwand der erfindungsgemäßen Gurtführung gegenüber den vorbekannten Vorrichtungen stark verringert ist und dadurch die Herstellungs- und Montagekosten des Gurtintegralsitzes deutlich reduziert werden.

In einer möglichen Weiterbildung des Gurtintegralsitzes ist ein Gurtführungselement derart angeordnet, dass nur auf einer Seite des Gurtes ein gurtführender Abschnitt des Gurtführungselementes benötigt wird, um eine ungehinderte Gurtführung zu gewährleisten, etwa wenn sich auf der anderen Seite des Gurtes ein weiteres nicht zur Gurtführung speziell umgeformtes Bauelement des Gurtintegralsitzes befindet oder wenn zu einer Seite des Gurtes ausreichend Abstand zu weiteren Bauelementen im Sitzinneren vorliegt.

Ein Ausführungsbeispiel der Erfindung wird nachfolgend mit Bezug auf die Zeichnungen näher erläutert. In den Zeichnungen zeigen:
- Fig. 1: eine Rückansicht einer Gurtintegralsitzlehne mit einem oberen und einem unteren Gurtführungselement an je einer Seite einer zweiteiligen Gurtintegralsitzlehne;
- Fig. 2: eine erste perspektivische Ansicht eines Teilbereichs der Gurtintegralsitzlehne aus Fig. 1;
- Fig. 3: eine zweite perspektivische Ansicht eines Teilbereichs der Gurtintegralsitzlehne aus Fig. 1;
- Fig. 4: eine dritte perspektivische Ansicht eines Teilbereichs der Gurtintegralsitzlehne aus Fig. 1.

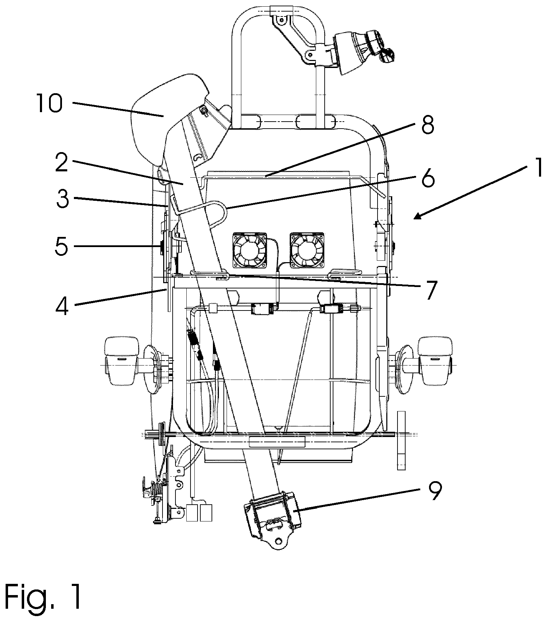

Eine in Fig. 1 in einer Rückansicht dargestellte Gurtintegralsitzlehne 1 besteht aus zwei - bezogen auf die Einbaulage eines hier nicht dargestellten Gurtintegralsitzes in einem Fahrzeug - vertikal übereinander angeordneten Lehnenteilen 3,4, wobei der obere Lehnenteil 3 relativ gegenüber dem unteren Lehnenteil 4 um eine Schwenkachse 5 verschwenkt werden kann.

Im unteren Bereich der Gurtintegralsitzlehne 1 befindet sich ein Aufrollautomat 9 eines Gurtes 2, der im Inneren der Gurtintegralsitzlehne 1 aufwärts verläuft bis dieser zur Vorderseite hin aus einer Gurtaustrittsöffnung 10 am oberen Ende der Gurtintegralsitzlehne 1 austritt.

Oberhalb der Schwenkachse 5 ist im Bereich des oberen Lehnenteils 3 ein oberes Gurtführungselement 6 angeordnet, wobei es mehrere gurtführende Abschnitte aufweist, die relativ zu dem Gurt 2 gewinkelt verlaufen.

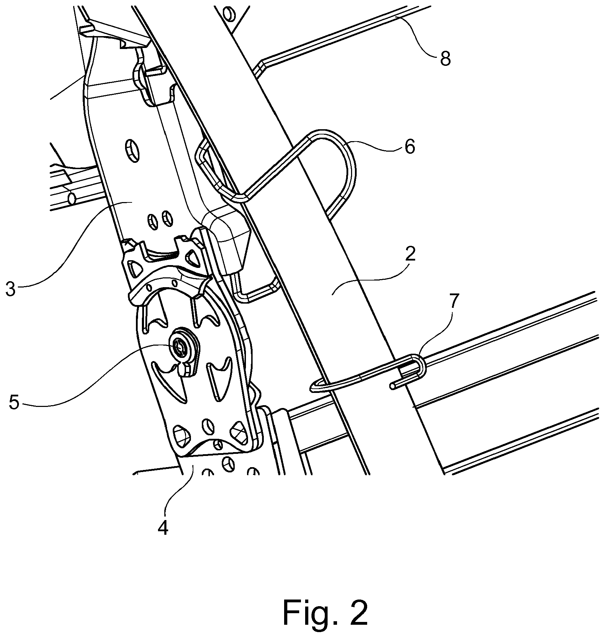

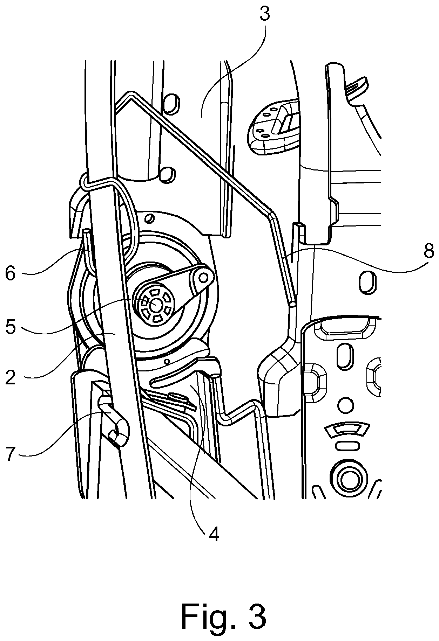

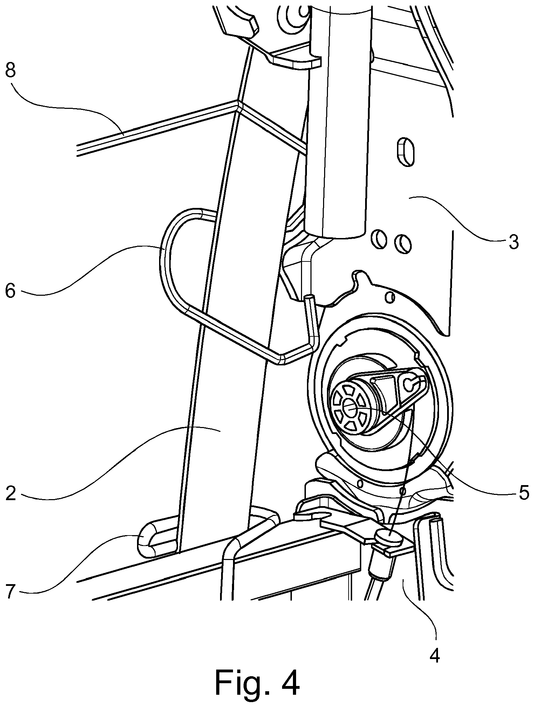

Bei der in Figur 1 dargestellten Ausführungsform der Vorrichtung zur Gurtführung ist das obere Gurtführungselement 6 durch Biegen aus einem Stück einer an dem oberen Lehnenteil 3 angebrachten metallischen Lordosenstütze 8 geformt und besteht aus insgesamt drei nahezu rechtwinklig zum Gurt 2 verlaufenden gurtführenden Abschnitten. Alle drei gurtführenden Abschnitte sind relativ zueinander entlang dem Verlauf des Gurtes 2 - bezogen auf die Einbaulage des Gurtintegralsitzes - vertikal übereinander in Abstand zueinander angeordnet, wobei der oberste und der unterste der drei Abschnitte sich auf der zur Vorderseite der Gurtintegralsitzlehne 1 hin gewandten Seite des Gurtes 2 befindet und der dritte, zwischen diesen beiden genannten gurtführenden Abschnitten liegenden Teil des oberen Gurtführungselementes 6 sich auf der zur Rückseite der Gurtintegralsitzlehne 1 gewandten Seite des Gurtes 2 befindet (vgl. Fig. 2 - 4).

Da das obere Gurtführungselement 6 durch mehrfaches Biegen eines einzelnen Werkstückes geformt ist, befinden sich zwischen den beidseitig des Gurtes 2 verlaufenden drei gurtführenden Abschnitten des oberen Gurtführungselementes 6 zwei Bereiche, in denen das Gurtführungselement 6 parallel zum Gurt und von einer Seite zur anderen Seite des Gurtes wechselnd verläuft und diesen gegen seitliches Verrutschen im Inneren der Gurtintegralsitzlehne 1 oder Herausrutschen aus dem Gurtführungselement 6 sichert, wie es in den perspektivischen Ansichten dieser Ausführungsform des vorliegenden Gurtführungselementes 6 aus verschiedenen Blickrichtungen in den Figuren 2-4, die einen Teilbereich des Gurtintegralsitzes aus Fig. 1 zeigen, besonders deutlich zu erkennen ist.

Unterhalb der Schwenkachse 5 im Bereich des unteren Lehnenteils 4 befindet sich ein unteres Gurtführungselement 7, welches zwei auf unterschiedlichen Seiten des Gurtes 2 befindliche Abschnitte umfasst, wobei beide Abschnitte in Gurtverlaufsrichtung sich gegenüberliegend, - bezogen auf die Einbaulage des Gurtintegralsitzes im Fahrzeug - auf gleicher Höhe angeordnet sind.

Das untere Gurtführungselement 7 ist ebenfalls als ein Teil einer sitzinternen Stützstruktur 8 durch mehrfaches Biegen dieses metallischen Bauteils gebildet, wobei das Gurtführungselement 7 an der zur Außenkante der Gurtintegralsitzlehne 1 zugewandten Seite des Gurtes 2 um diesen herum geführt ist und diesen somit gegen ein seitliches Verrutschen in Richtung des Rahmens des unteren Lehnenteils 4 sichert, wie ebenfalls in den Figuren 2 -4 aus verschiedenen Blickrichtungen detailliert dargestellt.

Die der Vorderseite der Gurtintegralsitzlehne 1 zugewandte Seite des Gurtes 2 wird nicht durch das Gurtführungselement 7, sondern durch eine sitzinterne Stützstruktur 8, mit der das Gurtführungselement 7 verbunden ist, geführt.

Es sind aber auch Ausführungsformen des unteren Gurtführungselementes 7 mit mehr als einem gurtführenden Abschnitt möglich. Dabei sind entlang dem Gurtverlaufmehrere relativ zueinander versetzte oder sich direkt gegenüberliegende gurtführenden Abschnitte des Gurtführungselementes 7 denkbar.

### Bezugszeichenliste

- 1: Gurtintegralsitzlehne
- 2: Gurt
- 3: Oberer Lehnenteil
- 4: Unterer Lehnenteil
- 5: Schwenkachse
- 6: Oberes Gurtführungselement
- 7: Unteres Gurtführungselement
- 8: Sitzinterne Stützstruktur
- 9: Aufrollautomat
- 10: Gurtaustrittsöffnung

## Patentansprüche

1. Vorrichtung zur Gurtführung an einem Gurtintegralsitz, mit
-- mindestens einem oberen Gurtführungselement (6) oberhalb einer Schwenkachse (5) einer mehrteiligen Rückenlehne (1) des Gurtintegralsitzes und
-- mindestens einem an der Rückenlehne (1) angeordneten, unteren Gurtführungselement (7) unterhalb der Schwenkachse (5) der mehrteiligen Rückenlehne (1) des Gurtintegralsitzes,
**dadurch gekennzeichnet, dass** mindestens ein Gurtführungselement (6, 7) drei entlang der Gurtverlaufrichtung im Abstand voneinander versetzt angeordnete Abschnitte aufweist, wobei die äußeren Abschnitte einerseits des Gurtes (2) angeordnet sind und der zwischen den äußeren Abschnitten liegende Abschnitt andererseits des Gurtes (2) angeordnet ist,
wobei die Gurtführungselemente (6, 7) dazu ausgebildet und
zueinander angeordnet sind, ein Einklemmen des Gurtes (2) bei einem Verstellen der mehrteiligen Rückenlehne (1) zu verhindern und
eine ungehinderte Beweglichkeit entlang der Gurtverlaufrichtung zu gewährleisten, indem mindestens ein Gurtführungselement (6, 7) durch Verformen eines Bauteils einer sitzinternen Stützstruktur (8) des Gurtintegralsitzes gebildet ist.

2. Vorrichtung zur Gurtführung nach Anspruch 1, **dadurch gekennzeichnet, dass** mindestens ein Gurtführungselement (6, 7) durch Biegen einer Verlängerung eines Bauteils einer sitzinternen Lordosenstütze (8) gebildet ist.

3. Vorrichtung zur Gurtführung nach einem oder mehreren der vorhergehenden Ansprüche, **dadurch gekennzeichnet, dass** mindestens ein Gurtführungselement (6, 7) aus Metall, bevorzugt aus Metalldraht gebildet ist.

4. Vorrichtung zur Gurtführung nach einem oder mehreren der vorhergehenden Ansprüche, **dadurch gekennzeichnet, dass** zumindest ein Gurtführungselement (6, 7) mindestens zwei gurtführende Abschnitte zur beidseitigen Führung des Gurtes (2) aufweist.

5. Vorrichtung zur Gurtführung nach einem oder mehreren der vorhergehenden Ansprüche, **dadurch gekennzeichnet, dass** die gurtführenden Abschnitte eines Gurtführungselementes (6, 7) gegenüber der Gurtverlaufsrichtung gewinkelt, bevorzugt rechtwinklig verlaufen.

6. Vorrichtung zur Gurtführung nach einem oder mehreren der vorhergehenden Ansprüche, **dadurch gekennzeichnet, dass** mehrere gurtführende Abschnitte eines Gurtführungselementes (6, 7) in Gurtverlaufsrichtung in Abstand voneinander angeordnet sind.

7. Vorrichtung zur Gurtführung nach einem oder mehreren der vorhergehenden Ansprüche, **dadurch gekennzeichnet, dass** mindestens ein Gurtführungselement (6, 7) mit beidseitig des Gurtes (2) anordbaren, gurtführenden Abschnitten eine die Abschnitte verbindende, den Gurt (2) gegen seitliches Verrutschen sichernde Seitenkante aufweist.

8. Gurtintegralsitz für ein Kraftfahrzeug, mit
-- einer mehrteiligen, um eine Schwenkachse (5) verschwenkbaren Gurtintegralsitzlehne (1),
-- einem zumindest teilweise innerhalb der Gurtintegralsitzlehne verlaufenden Gurt (2) und
-- einer Vorrichtung zur Gurtführung nach einem oder mehreren der Ansprüche 1 bis 7.

## Claims

1. Device for guiding a belt on a belt-integrated seat, having
- at least one upper belt-guiding element (6) above a pivot axis (5) of a multipart backrest (1) of the belt-integrated seat, and
- at least one lower belt-guiding element (7), which is arranged on the backrest (1), below the pivot axis (5) of the multipart backrest (1) of the belt-integrated seat,
**characterized in that** at least one belt-guiding element (6, 7) has three portions which are arranged offset at a distance from one another along the belt-running direction, wherein the outer portions are arranged on one side of the belt (2) and the portion lying between the outer portions is arranged on the other side of the belt (2), wherein the belt-guiding elements (6, 7) are designed and arranged with respect to each other in order to prevent jamming of the belt (2) during adjustment of the multipart backrest (1) and to ensure unhindered movability along the belt-running direction by at least one belt-guiding element (6, 7) being formed by deformation of a component of a seat-internal supporting structure (8) of the belt-integrated seat.

2. Device for guiding a belt according to Claim 1, **characterized in that** at least one belt-guiding element (6, 7) is formed by bending an extension of a component of a seat-internal lordosis support (8) .

3. Device for guiding a belt according to one or more of the preceding claims, **characterized in that** at least one belt-guiding element (6, 7) is formed from metal, preferably from metal wire.

4. Device for guiding a belt according to one or more of the preceding claims, **characterized in that** at least one belt-guiding element (6, 7) has at least two belt-guiding portions for guiding the belt (2) on both sides.

5. Device for guiding a belt according to one or more of the preceding claims, **characterized in that** the belt-guiding portions of a belt-guiding element (6, 7) run at an angle, preferably a right angle, in relation to the belt-running direction.

6. Device for guiding a belt according to one or more of the preceding claims, **characterized in that** a plurality of belt-guiding portions of a belt-guiding element (6, 7) are arranged at a distance from one another in the belt-running direction.

7. Device for guiding a belt according to one or more of the preceding claims, **characterized in that** at least one belt-guiding element (6, 7) having belt-guiding portions which can be arranged on both sides of the belt (2) has a side edge which connects the portions and secures the belt (2) against slipping laterally.

8. Belt-integrated seat for a motor vehicle, having
- a multipart belt-integrated seat back (1) which is pivotable about a pivot axis (5),
- a belt (2) running at least partially within the belt-integrated seat back, and
- a device for guiding a belt according to one or more of Claims 1 to 7.

## Revendications

1. Dispositif de guidage de ceinture sur un siège à ceinture intégrée, comprenant :
- au moins un élément de guidage de ceinture supérieur (6) au-dessus d'un axe de pivotement (5) d'un dossier (1) en plusieurs parties du siège à ceinture intégrée, et
- au moins un élément de guidage de ceinture inférieur (7) disposé sur le dossier (1) en dessous de l'axe de pivotement (5) du dossier (1) en plusieurs parties du siège à ceinture intégrée,
**caractérisé en ce qu'**au moins un élément de guidage de ceinture (6, 7) présente trois portions disposées de manière décalée à distance les unes des autres le long de la direction d'étendue de la ceinture, les portions extérieures étant disposées d'un côté de la ceinture (2) et la portion située entre les portions extérieures étant disposée de l'autre côté de la ceinture (2), les éléments de guidage de ceinture (6, 7) étant réalisés et disposés l'un par rapport à l'autre de manière à empêcher un blocage de la ceinture (2) lors d'un réglage du dossier (1) en plusieurs parties et à garantir une mobilité sans obstruction le long de la direction d'étendue de la ceinture, par le fait qu'au moins un élément de guidage de ceinture (6, 7) est formé par façonnage d'un composant d'une structure de support (8) interne au siège, du siège à ceinture intégrée.

2. Dispositif de guidage de ceinture selon la revendication 1, **caractérisé en ce qu'**au moins un élément de guidage de ceinture (6, 7) est formé par cintrage d'un prolongement d'un composant d'un support lombaire interne au siège (8).

3. Dispositif de guidage de ceinture selon l'une quelconque ou plusieurs des revendications précédentes, **caractérisé en ce qu'**au moins un élément de guidage de ceinture (6, 7) est formé de métal, de préférence de fil métallique.

4. Dispositif de guidage de ceinture selon l'une quelconque ou plusieurs des revendications précédentes, **caractérisé en ce qu'**au moins un élément de guidage de ceinture (6, 7) présente au moins deux portions de guidage de ceinture pour le guidage de la ceinture (2) des deux côtés.

5. Dispositif de guidage de ceinture selon l'une quelconque ou plusieurs des revendications précédentes, **caractérisé en ce que** les portions de guidage de ceinture d'un élément de guidage de ceinture (6, 7) s'étendent sous forme coudée par rapport à la direction d'étendue de la ceinture, de préférence à angle droit.

6. Dispositif de guidage de ceinture selon l'une quelconque ou plusieurs des revendications précédentes, **caractérisé en ce que** plusieurs portions de guidage de ceinture d'un élément de guidage de ceinture (6, 7) sont disposées à distance les unes des autres dans la direction d'étendue de la ceinture.

7. Dispositif de guidage de ceinture selon l'une quelconque ou plusieurs des revendications précédentes, **caractérisé en ce qu'**au moins un élément de guidage de ceinture (6, 7) avec des portions de guidage de ceinture pouvant être disposées des deux côtés de la ceinture (2) présente un bord latéral reliant les portions, fixant la ceinture (2) pour l'empêcher de glisser latéralement.

8. Siège à ceinture intégrée pour un véhicule automobile, comprenant :
- un dossier de siège à ceinture intégrée (1) pouvant pivoter autour d'un axe de pivotement (5),
- une ceinture (2) s'étendant au moins en partie à l'intérieur du dossier à ceinture intégrée, et
- un dispositif de guidage de ceinture selon l'une quelconque ou plusieurs des revendications 1 à 7.
